# EUROPEAN PATENT SPECIFICATION

(11) **EP 3 407 122 B1**
(45) Date of publication and mention of the grant of the patent: **14.07.2021**
(21) Application number: 17305606.0
(22) Date of filing: 23.05.2017
(51) Int. Cl.: G02F 1/017

(54) **METHOD FOR MANUFACTURING AN ELECTRO-ABSORPTION MODULATOR**
VERFAHREN ZUR HERSTELLUNG EINES ELEKTROABSORPTIONSMODULATORS
PROCÉDÉ DE FABRICATION D'UN MODULATEUR À ÉLECTRO-ABSORPTION

(43) Date of publication of application: 28.11.2018
(73) Proprietor: Nokia Solutions and Networks Oy, 02610 Espoo (FI)
(72) Inventor: ACHOUCHE, Mohand, 91767 PALAISEAU (FR); DEBREGEAS, Hélène, 91767 PALAISEAU (FR)
(74) Representative: Novagraaf Technologies

(56) References cited:
- ELIZABETH H EDWARDS ET AL: "Si-Ge surface-normal asymmetric fabry-perot quantum-confined stark effect electroabsorption modulator", IEEE PHOTONICS SOCIETY, 2010 23RD ANNUAL MEETING OF THE, IEEE, PISCATAWAY, NJ, USA, 7 November 2010 (2010-11-07), pages 514-516, XP031858260, ISBN: 978-1-4244-5368-9
- AUDET ROSS M ET AL: "Ge/SiGe quantum well asymmetric Fabry-Perot modulators on silicon substrates", 2013 IEEE PHOTONICS SOCIETY SUMMER TOPICAL MEETING SERIES, IEEE, 8 July 2013 (2013-07-08), pages 248-249, XP032491848, DOI: 10.1109/PHOSST.2013.6614532 [retrieved on 2013-09-27]
- BYUNG HOON NA ET AL: "Design, Fabrication and Characterization of Asymmetric Fabry-Perot Modulator for Large Size Optical Shutter", ELECTRONIC DESIGN, TEST AND APPLICATION, 2010. DELTA '10. FIFTH IEEE INTERNATIONAL SYMPOSIUM ON, IEEE, PISCATAWAY, NJ, USA, 13 January 2010 (2010-01-13), pages 35-38, XP031653282, ISBN: 978-0-7695-3978-2

## Description

### Field of the Invention

The present invention relates to an electro-absorption modulator.

### Background

In order to reduce cost in data centres or access networks, a solution consists in using shared central Wavelength Division Multiplexing (commonly designated by "WDM") sources and remote modulators. The problem is to provide fast modulators (approximatively 25 GB/s), colourless (operating over typically 16 x 50GHz), with low cost and consumption (low packaging cost, low modulation voltages).

A solution would consist in using edge-coupled reflective modulators, with standard modulator designs. But it's very beneficial to replace edge coupling from fibre to modulator by surface coupling, leading to drastically lower costs (packaging and possible on-wafer testing), just like vertical-cavity surface-emitting lasers (VCSELs) provide much lower cost than edge emitting lasers.

Currently, in order to allow low-cost vertical coupling for datacentre applications, one may propose to develop electro-absorption modulators in form of a vertical cavity, based on InP or GaAs substrates. The bottom mirror, or the first high reflection coating, is a stack of layers with high index contrast (AlAs/AlGaAs for example). The top mirror, or the second partially reflection coating, can be a high-reflection-coated surface, the bottom mirror having to be as high reflective as possible. Notice that the top mirror must be partially reflective, as light is coupled from surface. In order to obtain sufficient extinction, chips are designed with a high number of a Multiple Quantum Wells (commonly designated by "MQWs"), ranging from 40 to 300. Due to the thick Multiple Quantum Wells stack, peak-to-peak modulation voltages range typically around 10V.

The problem is that with vertical cavity modulators, the propagation length in the modulator absorption structure is limited by the multiple quantum wells thickness and the reflectivity of vertical mirrors. The fabrication of epitaxial high reflection bottom mirror is a complex and expensive process, based on a stack of tens of pairs of III-V materials with limited index contrast.

ELIZABETH H EDWARDS ET AL: "Si-Ge surface-normal asymmetric fabry-perot quantum-confined stark effect electroabsorption modulator",IEEE PHOTONICS SOCIETY, 2010 23RD ANNUAL MEETING OF THE, IEEE, PISCATAWAY, NJ, USA, 7 November 2010 (2010-11-07), pages 514-516, XP031858260,ISBN: 978-1-4244-5368-9, discloses a prior art method of fabricating an electro-absorption modulator.

### Summary

The present invention proposes a method for manufacturing an electro-absorption modulator able to enhance extinction ratio with simple high reflectivity mirrors, to ensure multiple paths into this electro-absorption modulator, multiply propagation length by the number of paths and solve the prior art drawbacks.

Therefore, a first object of the present invention is a method for manufacturing an electro-absorption modulator characterised in that it comprises steps consisting of:
a) providing a planarized silicon wafer;
b) applying a first high reflection coating multilayer on said silicon wafer;
c) bonding at least one multiple quantum well modulator on said first high reflection coating multilayer, in order to obtain a wafer bonded assembly;
d) thinning and etching said wafer bonded assembly; and
e) applying a second high reflection coating multilayer on the thinned and etched wafer bonded assembly.

Advantageously, the first high reflection coating multilayer may comprise layers of SiO₂ and Si₃N₄. These materials are used for high efficiency because they present high index contrast. The deposition of these materials is easy compared to the deposition by epitaxy process and allows a high index contrast to simplify the control of the deposition.

Advantageously, the multiple quantum well may be an InGaAsP or InGaAIAs multiple quantum well on an InP substrate.

Advantageously, the reflectivity of said first high reflection coating multilayer may be above 90% and the reflectivity of said second high reflection coating multilayer is ranging between 20% and 70%.

Advantageously, the multiple quantum well modulator may be grown by epitaxy process, then directly bonded on the first high reflection coating multilayer.

Advantageously, the multiple quantum well modulator may be III-V multiple quantum well modulator type. III-V materials are used in optoelectronics because they provide a direct bandgap for carriers, leading to possible photon emission and electro-absorption effect.

Advantageously, the method further may comprise, after realising step e), a step consisting of etching, passivating, ion implanting or metallizing.

Advantageously, the method further comprises, before the planarization of the silicon wafer, a step consisting of forming a patterned waveguide comprising a 2-order diffraction grating into with a periodicity A such that λ = n_{eff}. Λ where λ is the injected wavelength and n_{eff} is the effective index of refraction of the waveguide.

### Brief Description of the Drawings

Some embodiments of method in accordance with embodiments of the present invention are now described, by way of example only, and with reference to the accompanying drawings, in which:
- the Figure 1 schematically illustrates a silicon wafer;
- the Figure 2 schematically illustrates the silicon wafer of Figure 1 after the applying of a first high reflection coating multilayer (step b) of the present invention);
- the Figure 3 schematically illustrates a multiple quantum well modulator;
- the Figure 4 schematically illustrates the silicon wafer of Figure 2 further comprising the multiple quantum well modulator of the Figure 3 (step c) of the present invention), wafer bonded upside down;
- the Figure 5 schematically illustrates the silicon wafer of Figure 4 after InP substrate being thinned and etched;
- the Figure 6 schematically illustrates the silicon wafer of Figure 5 further comprising a second high reflection coating multilayer;
- the Figure 7 schematically illustrates the silicon wafer of Figure 6 being processed to delimit modulator cavity by etching and apply electrical contacts;
- the figure 8 schematically illustrates a side view of the silicon wafer of Figure 7 in operation with a optic fibre,
- the Figure 9a schematically illustrates a top view of the silicon wafer comprising pattern waveguide, and
- the Figure 9b schematically illustrates a side view of the silicon wafer of Figure 9a.

### Description of Embodiments

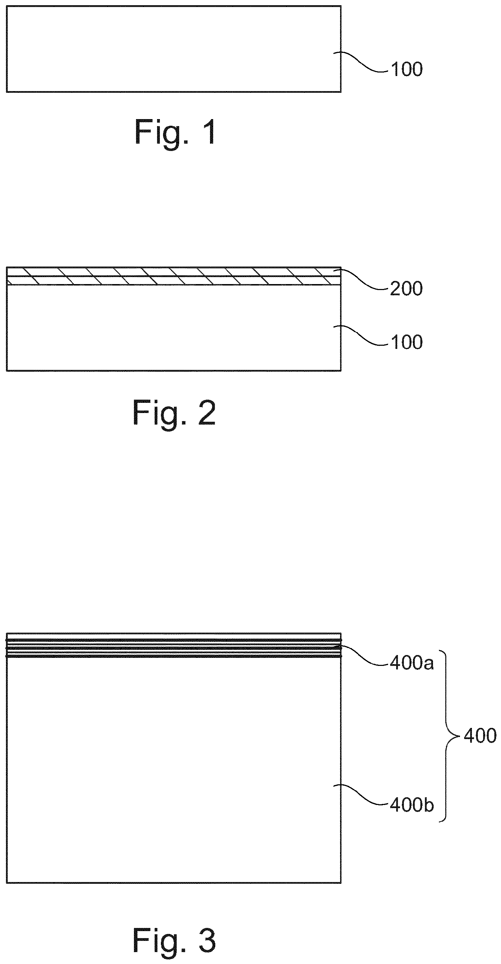

For the realisation of a particular embodiment of the method of the invention, a 200 mm planarized silicon wafer 100 with a typical thickness of 440 nm thick silicon top layer is used (figure 1). To flatten the surface of the silicon wafer 100, a silica layer is deposited and a chemical-mechanical polishing is applied on it. Thus, we obtain the silicon wafer of figure 1.

Figure 2 shows the silicon wafer of figure 1 after the applying of a first high reflection coating multilayer 200 (step b) of the present invention). The application of the first high reflection coating multilayer 200, on the top of the silicon wafer 100 is realized by standard process. For example, this first high reflection coating multilayer 200 may be a SiO₂/Si₃N₄ multiple stack. These materials are some of the standard materials used for facet coating, but it is possible to use others such as Si, Al₂O₃, etc. Notice that, instead of using an epitaxy grown to create the first high reflection coating multilayer 200, that it is an applying step currently used, the first high reflection coating multilayer 200 is directly deposited on top of the silicon wafer 100.

After, as shown in figure 3, a III-V multiple quantum well modulator 400 is realised after that the InP substrate 400b is grown, this InP substrate 400b can be grown until a wafer presenting a diameter approximatively equal to 5 cm and a thickness approximatively equal to 350 µm is obtained. The multiple quantum wells 400a is the III-V region. In the embodiment, the III-V region consists of a p-InGaAs contact layer, a p-lnP cladding layer, typically 15 or 20 InGaAsP quantum wells surrounded by two InGaAsP separate confinement heterostructure layers, and a n-lnP layer. In other words, the multiple quantum wells 400a are, in this configuration, an InGaAsP multiple quantum well on an InP substrate 400b. Notice that, since this is a vertical electro-absorption modulators, the number of wells of the multiple quantum well modulator 400 has to be high. Besides, in the same way as for vertical-cavity surface-emitting lasers, the structure of the electro-absorption modulators has to be calculated such that the oscillating mode has maxima positioned in the multiple quantum wells 400a, to increase optical confinement in multiple quantum wells 400a, and thereby increase extinction ratio. Optimized growth conditions have been established in order to achieve simultaneously a defect-free surface morphology required for bonding and high optic performances. Notice that epitaxy process is a complex process, with a quantity of parameters, such as temperature, proportion of materials III and V. Besides, these optimisations depend on the epitaxy technology used, such as Molecular Beam Epitaxy (MBE) or Metal-Organic Vapor Phase Epitaxy (MOVPE).

In the embodiment, the III-V wafer is grown by epitaxy on the InP substrate 400b, then directly bonded on top of the first high reflection coating multilayer 200 by simple contact. This technology, called wafer bonding, has been studied by several labs among which III-V Lab.

Notice that InP substrate 400b is typically used for electro-absorption modulators in telecommunications applications. For other applications in function of wavelengths range, we might use other III-V substrate and multiple quantum well material.

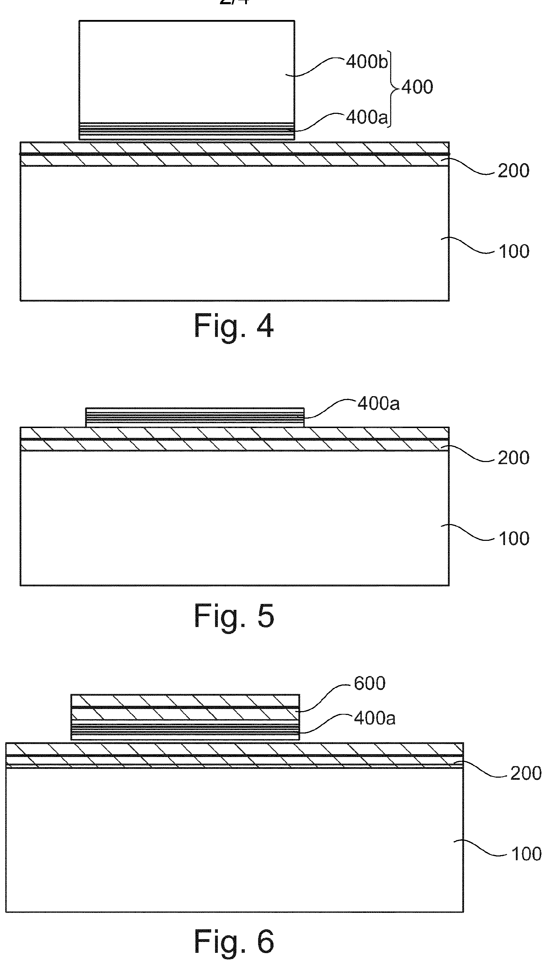

Figure 5 shows that, after the bonding of the multiple quantum well modulator 400 on the first high reflection coating multilayer 200, the InP substrate 400b is thinned and etched down to the bottom of multiple quantum wells (step d) of the invention). In particular, after wafer bonding and the InP substrate 400b removal, dry etching is used to etch through the InGaAs layer and partly etch the InP p-doped waveguide cladding layer. The InP etching is completed by chemical selective etching. The multiple quantum well modulator 400 layer is, for example, etched by CH₄:H₂ Reactive-Ion Etching (currently designated by "RIE").

Then, a top mirror, or a second high reflection coating multilayer 600, is applied, on the multiple quantum wells 400a, by metal deposition, or by multi-layer dielectrics stack, as shown in the figure 6 ((step d) of the invention).

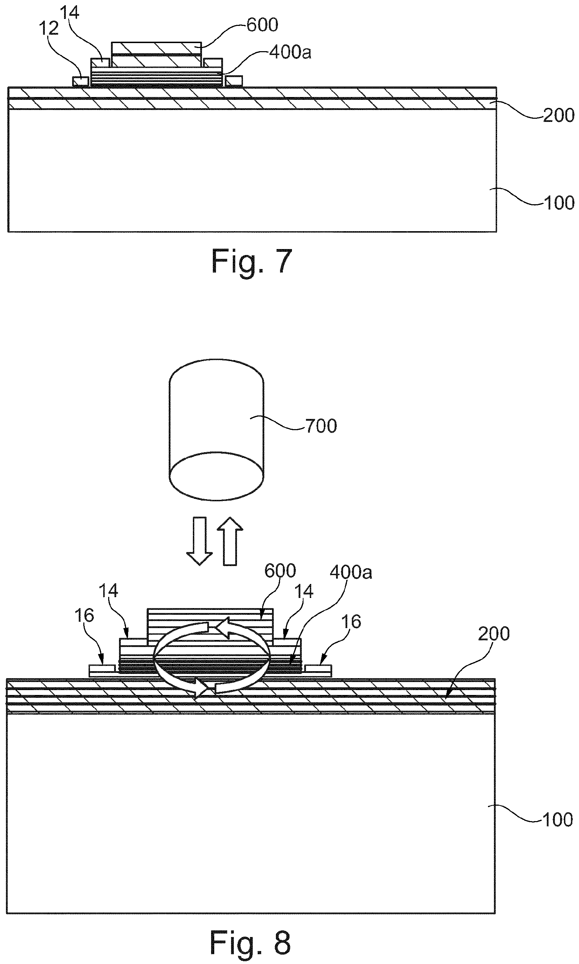

Figure 7 shows the electro-absorption modulator of figure 6 processed for electrical control, with etching, passivation, ion implantation and metallization. In particular, the metallization for the realisation of contacts is carried on, for example, for the realisation of P-contacts 12 and N-contacts 14. In particular, a Ti/Pt/Au alloy is used for metallization on both P and N contacts, 12 and 14.

The figure 8 shows a vertical electro-absorption modulator obtained according to the particular embodiment of the invention and presents a first high reflection coating multilayer 200 made of dielectric. The light is coupled from above from an optical fiber 700.

This particular embodiment of the invention has many advantages. It offers an enhanced extinction ratio due to the stacking of many multiple quantum wells 400a constituting the multiple quantum well modulator 400, in order to increase propagation length. Further, the Multiple Quantum Wells 400a must be sandwiched between two reflective mirrors to ensure multiple paths into this vertical cavity in order to offer an ensured multiple paths into this electro-absorption modulator and multiply propagation length by the number of paths. This latest effect is because the first high reflection coating multilayer 200 is simply deposited on silicon wafer 100. Thus, this first high reflection coating multilayer 200 is easy to fabricate and control. Furthermore, notice that the electro-absorption modulator epitaxy is much simpler as it no longer needs a bottom III-V mirror.

Thus, the electro-absorption modulator comprises reflective mirrors, the first high reflection coating multilayer 200 and the second high reflection coating multilayer 600. These high reflection coatings, 200 and 600, are thus provided by standard reflection coating on silicon, or by metallisation for the second high reflection coating multilayer 600. Notice that the reflectivity of said first high reflection coating multilayer 200 is above 90% and the reflectivity of said second high reflection coating multilayer 600 is ranging between 20% and 70%.

Notice that, according to the electro-absorption modulator obtained, it is possible to obtain two high reflection mirrors, the first high reflection coating multilayer 200 and the second high reflection coating multilayer 600, on both sides of the multiple quantum wells 400a. Applications of these two high reflection coating multilayers, 200 and 600, can be achieved with standard process, with controllable reflectivities, which can be as high as 99%. Due to these high reflectivities, light propagates multiple times in the electro-absorption modulator, so the necessary number of wells can be reduced to a more reasonable number, comprising between 10 and 20 number of wells, while keeping a high extinction ratio. Besides, the first high reflection coating multilayer 200 doesn't need to be a thick stack of low-index contrast III-V layers, epitaxially grown together with the electro-absorption modulator. The multiple quantum wells 400a are thus based on standard epitaxy growths.

Thanks to the facility to reach high reflectivity from these two high reflection coating multilayers, 200 and 600, (compared to multiple stacks epitaxy grown mirrors), the multiple quantum well modulator 400 cavity thickness is reduced, leading to more standard epitaxy and lower modulation voltages.

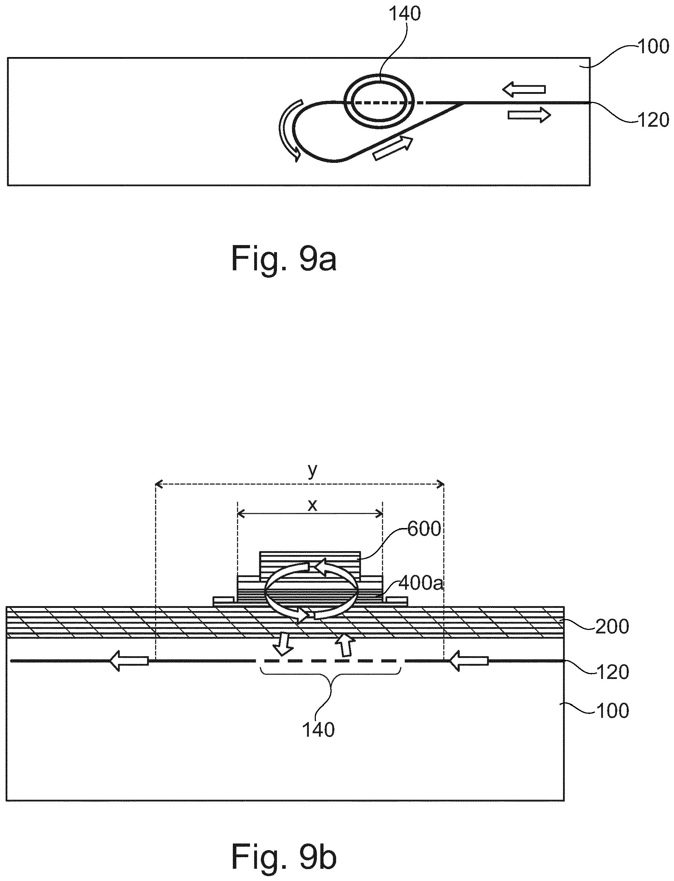

According to another embodiment, as shown in figure 9a, a light may be propagating in pattern waveguides 120 on the Si wafer 100, and vertically coupled with a 2^{nd} order grating 140. For this, we use a silicon wafer 100 comprising passive pattern waveguides 120 obtained after etching the top silicon layer. After this etching step, the remaining silicon layer has a thickness of 220 nm. For the passive circuitry, additional etching steps are applied to form a 2-order diffraction grating 140, this 2-order diffraction grating 140 being realised by strip waveguides and other elements such as Bragg reflectors or vertical output couplers.

Thus, in contrast with the silicon wafer 100 of the figure 1, in figures 9a and 9b, we have a planarized silicon wafer 100 comprising a two-order diffraction grating 140 into a patterned waveguide 120. The patterned waveguide 120 is defined by two-order diffraction gratings 140 characterized by a periodicity A such that λ = n_{eff}. A where λ is the injected wavelength, and n_{eff} is the effective refractive index of the waveguide. For example, the grating duty cycle of these diffraction gratings 140 can be 50%. The duty cycle is the ratio of length with a grating tooth or without. Indeed typically a duty cycle as close to 50% as possible is used to have efficient diffraction.

In this configuration, the silicon waveguide 120 can be coupled back into the input waveguide after the electro-absorption modulator in order to ensure the reflective behaviour of this electro-absorption modulator. In this case, the first high reflection coating multilayer 200 of the electro-absorption modulator can be approximatively equal to 50% while the second high reflection coating multilayer 600 can be highly reflective and typically above 90%.

In particular, as shown in figure 9b, the optical cavity is only vertical between the two mirrors, the first high reflection coating multilayer 200 and the second high reflection coating multilayer 600.

There is no grating between the distance Y. The right arrow represents light coming into electro-absorption modulator, then it is coupled up via the 2-order diffraction grating 140 into the reflective electro-absorption modulator. After that, the light oscillates inside the vertical cavity delimited by the two vertical mirrors, the first high reflection coating multilayer 200 and the second high reflection coating multilayer 600, then coupled back via the 2-order diffraction grating 140 into the output waveguide 120, then transmitted as illustrated by the left arrow. Notice that in this first use, there is only one grating to couple light into the second high reflection coating multilayer 600. In particular, the light is propagated into the waveguide 120, generated in another part of the device or even externally. For example, it could be an external multi-wavelength source, coupled into a silicon arrayed waveguide grating, and waveguide 120 would be one of the arrayed waveguide gratings output. The 2-order diffraction grating 140 is designed for a specific wavelength, to couple light vertically.

Notice that the electro-absorption modulator only coupling light out of the waveguide 120 to the reflective vertical electro-absorption modulator, then coupled back into the waveguide 120. There is no laser in the invention, only a reflective electro-absorption modulator.

With the electro-absorption modulator showed in figures 9a and 9b, light is coupled between the silicon waveguide 120 to the bottom of the electro-absorption modulator via the 2-order diffraction grating 140.

In addition, this method ensures coupling either via a fibre or through silicon photonics waveguides and provides further the advantage of vertical emission while keeping a simple epitaxy structure.

In these two latest embodiments (figures 9a and 9b), it is possible to add a demultiplexer role to the Si waveguide 120 by integrating several modulator. Indeed, it is possible to inject, into the Si waveguide 120, a light that contains a comb of wavelengths. The modulators would be in series, but each with a network of order 2 corresponding to a different wavelength. Each wavelength can then be selectively extracted by the grating, modulated, and reinjected into the Si waveguide 120.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions.

## Claims

1. Method for manufacturing an electro-absorption modulator comprises steps consisting of:
a) providing a planarized silicon wafer (100);
b) applying a first high reflection coating multilayer (200) on said silicon wafer (100);
c) bonding at least one multiple quantum well modulator (400) on said first high reflection coating multilayer (200), in order to obtain a wafer bonded assembly;
d) thinning and etching said wafer bonded assembly; and
e) applying a second high reflection coating multilayer (600) on the thinned and etched wafer bonded assembly,
the method being **characterised in that** said multiple quantum well modulator (400) is grown by epitaxy process, then directly bonded on the first high reflection coating multilayer (200).

2. Method according to claim 1, wherein said first high reflection coating multilayer (200) comprises layers of SiO₂ and Si₃N₄.

3. Method according to claims 1 or 2, wherein said multiple quantum well (400) is an InGaAsP or InGaAIAs multiple quantum well on an InP substrate.

4. Method according to any one of claims 1 to 3, wherein the reflectivity of said first high reflection coating multilayer (200) is above 90% and the reflectivity of said second high reflection coating multilayer (600) is ranging between 20% and 70%.

5. Method according to any one of claims 1 to 4, wherein said multiple quantum well modulator (400) is III-V multiple quantum well modulator type.

6. Method according to any one of claims 1 to 5, wherein the method further comprises, after realising step e), a step consisting of etching, passivating, ion implanting or metallizing.

7. Method according to any one of claims 1 to 6, wherein the method further comprises, before the planarization of the silicon wafer (100), a step consisting of forming a 2-order diffraction grating (140) into said patterned waveguide (120) with a periodicity A such that λ = n_{eff}. A where λ is the injected wavelength and n_{eff} is the effective index of refraction of the waveguide.

8. Method according to claim 7, wherein said patterned waveguide (120) comprises several modulators, each with a second-order network step corresponding to one of the wavelengths.

## Patentansprüche

1. Verfahren zur Herstellung eines Elektroabsorptionsmodulators, das die Schritte umfasst, die aus Folgendem bestehen:
a) Bereitstellen eines planarisierten Silizium-Wafers (100) ;
b) Aufbringen einer ersten Mehrfachbeschichtung (200) mit hohem Reflexionsvermögen auf dem Silizium-Wafer (100);
c) Bonden mindestens eines Mehrfach-Quantum-Well-Modulators (400) an die erste Mehrfachbeschichtung (200) mit hohem Reflexionsvermögen, um eine gebondete Wafer-Baugruppe zu erhalten;
d) Verdünnen und Ätzen der gebondeten Wafer-Baugruppe; und
e) Aufbringen einer zweiten Mehrfachbeschichtung (600) mit hohem Reflexionsvermögen auf die verdünnte und geätzte gebondete Wafer-Baugruppe,
wobei das Verfahren **dadurch gekennzeichnet ist, dass** der Mehrfach-Quantum-Well-Modulator (400) durch einen epitaktischen Prozess gewachsen wird und dann direkt an die Mehrfachbeschichtung (200) mit hohem Reflexionsvermögen gebondet wird.

2. Verfahren nach Anspruch 1, wobei die Mehrfachbeschichtung (200) mit hohem Reflexionsvermögen Schichten aus SiO₂ und Si₃N₄ umfasst.

3. Verfahren nach Anspruch 1 oder 2, wobei der Multiple-Quantum-Well (400) ein InGaAsP- oder InGaAlAs-Multiple-Quantum-Well auf einem InP-Substrat ist.

4. Verfahren nach einem der Ansprüche 1 bis 3, wobei das Reflexionsvermögen der ersten Mehrfachbeschichtung (200) mit hohem Reflexionsvermögen über 90 % beträgt und das Reflexionsvermögen der zweiten Mehrfachbeschichtung (600) mit hohem Reflexionsvermögen zwischen 20 % und 70 % beträgt.

5. Verfahren nach einem der Ansprüche 1 bis 4, wobei der Multiple-Quantum-Well-Modulator (400) vom Typ III-V-Multiple-Quantum-Well-Modulator ist.

6. Verfahren nach einem der Ansprüche 1 bis 5, wobei das Verfahren ferner nach dem Ausführen von Schritt e) einen Schritt umfasst, der im Ätzen, Passivieren, Ionenimplantieren oder Metallisieren besteht.

7. Verfahren nach einem der Ansprüche 1 bis 6, wobei das Verfahren ferner vor der Planarisierung des Silizium-Wafers (100) einen Schritt umfasst, der aus dem Bilden eines Beugungsgitters (140) zweiter Ordnung in den strukturierten Wellenleiter (120) mit einer Periodizität A besteht, derart, dass λ = η_{eff}. Λ, wo λ die eingekoppelte Wellenlänge ist und η_{eff} der effektive Brechungsindex des Wellenleiters ist.

8. Verfahren nach Anspruch 7, wobei der strukturierte Wellenleiter (120) verschiedene Modulatoren, jeweils mit einer Netzstufe zweiter Ordnung, die einer der Wellenlängen entspricht, umfasst.

## Revendications

1. Procédé pour fabriquer un modulateur à électro-absorption, comprenant les étapes consistant à :
a) disposer d'une galette de silicium aplanie (100) ;
b) appliquer une première multicouche de revêtement à réflexion élevée (200) sur ladite galette de silicium (100) ;
c) coller au moins un modulateur à puits quantique multiple (400) sur ladite multicouche de revêtement à réflexion élevée (200) afin d'obtenir un assemblage collé de galette ;
d) amincir et graver ledit assemblage collé de galette ; et
e) appliquer une deuxième multicouche de revêtement à réflexion élevée (600) sur l'assemblage collé de galette aminci et gravé,
le procédé étant **caractérisé en ce que** ledit modulateur à puits quantique multiple (400) a crû par un traitement d'épitaxie, puis directement collé sur la première multicouche de revêtement à réflexion élevée (200).

2. Procédé selon la revendication 1, dans lequel ladite multicouche de revêtement à réflexion élevée (200) comprend des couches de SiO₂ et de Si₃N₄.

3. Procédé selon la revendication 1 ou 2, dans lequel ledit puits quantique multiple (400) est un puits quantique multiple en InGaAsP ou en InGaAlAs sur un substrat en InP.

4. Procédé selon l'une quelconque des revendications 1 à 3, dans lequel la réflectivité de ladite première multicouche de revêtement à réflexion élevée (200) est supérieure à 90 % et la réflectivité de ladite deuxième multicouche de revêtement à réflexion élevée (600) est située dans la plage comprise entre 20 % et 70 %.

5. Procédé selon l'une quelconque des revendications 1 à 4, dans lequel ledit modulateur à puits quantique multiple (400) est un modulateur à puits quantique multiple de type III-V.

6. Procédé selon l'une quelconque des revendications 1 à 5, lequel procédé comprend en outre, après la réalisation de l'étape e), une étape consistant à graver, passiver, implanter des ions, ou métalliser.

7. Procédé selon l'une quelconque des revendications 1 à 6, lequel procédé comprend en outre, avant l'aplanissement de la galette de silicium (100), une étape consistant à former un réseau de diffraction de second ordre (140) dans ledit guide d'onde texturé (120) avec une périodicité A telle que λ = n_{eff}. A où λ est la longueur d'onde injectée et n_{eff} est l'indice effectif de réfraction du guide d'onde.

8. Procédé selon la revendication 7, dans lequel ledit guide d'onde texturé (120) comprend plusieurs modulateurs, chacun avec une étape de réseau de second ordre correspondant à l'une des longueurs d'onde.
